# FASCICULE DE BREVET EUROPEEN

(11) **EP 4 069 540 B1**
(45) Date de publication et mention de la délivrance du brevet: **25.10.2023**
(21) Numéro de dépôt: 20861955.1
(22) Date de dépôt: 12.11.2020
(51) Int. Cl.: B60K 6/48, B60W 10/02, B60W 10/06, B60W 10/08, B60W 20/10, B60W 20/50, B60W 50/038

(54) **PROCEDE DE COMPENSATION D'ERREURS DE REALISATION DE COUPLE D'UN MOTEUR THERMIQUE DANS UNE CHAINE DE TRACTION HYBRIDE**
VERFAHREN ZUM KOMPENSIEREN VON DREHMOMENTERZEUGUNGSFEHLERN EINES VERBRENNUNGSMOTORS IN EINEM HYBRID-ANTRIEBSSTRANG
METHOD FOR COMPENSATING FOR TORQUE PRODUCTION ERRORS OF A COMBUSTION ENGINE IN A HYBRID DRIVETRAIN

(30) Priorité: 05.12.2019 FR 1913790
(43) Date de publication de la demande: 12.10.2022
(73) Titulaire: PSA Automobiles SA, 78300 Poissy (FR)
(72) Inventeur: BASTIANI, Philippe, 78300 POISSY (FR); FREIRE SUAREZ, Violette, 78150 LE CHESNAY (FR); BARDET, Arnaud, 78150 LE CHESNAY (FR); MILHAU, Yohan, 78630 ORGEVAL (FR); ROCQ, Gaetan, 78125 LA BOISSIERE ECOLE (FR); HABBANI, Ridouane, 92600 ASNIERES SUR SEINE (FR)
(86) Numéro de dépôt international: PCT/FR2020/052063
(87) Numéro de publication internationale: WO 2021/111050

(56) Documents cités:
- US-A1- 2014 278 002
- US-A1- 2015 027 407
- US-A1- 2018 186 361

## Description

La présente invention revendique la priorité de la demande française N°1913790 déposée le 05.12.2019.

La présente invention porte sur un procédé de compensation d'erreurs de réalisation de couple d'un moteur thermique dans une chaîne de traction hybride.

De façon connue en soi, une chaîne de traction hybride pour un véhicule automobile peut comporter un moteur thermique et un moteur électrique de traction montés sur un train du véhicule automobile, notamment un train avant. Le moteur thermique est accouplé à une boîte de vitesses par l'intermédiaire d'un embrayage. Un arbre de sortie de la boîte de vitesses est connecté aux roues par l'intermédiaire d'un différentiel. Le moteur électrique est disposé en aval de l'embrayage.

Avec un rapport de boîte engagé, la réalisation d'un couple cible correspondant à une volonté d'accélération du conducteur consiste en la réalisation physique d'un couple du moteur électrique de traction et d'un couple transmis par l'embrayage. Pour un embrayage à l'état fermé, le couple transmis par ce dernier est le couple du moteur thermique à un terme inertiel près.

Les consignes de couple du moteur thermique et les consignes de couple du moteur électrique sont issues d'un calcul d'optimisation des points de fonctionnement de la chaîne de traction. Ces consignes sont calculées en tenant compte des limitations maximales et minimales envoyées par les organes de traction constitués par le moteur thermique et le moteur électrique de traction.

On connaît par exemple un tel procédé du document de brevet US-A1-2015027407.

Dans le cas où le moteur thermique n'est pas en mesure de réaliser le couple de consigne demandé alors que la limitation le permettait, l'écart de réalisation entre la consigne du moteur thermique et sa réalisation va systématiquement être compensé par un surcouple appliqué par le moteur électrique. Cela permet de respecter le couple cible correspondant à la volonté d'accélération de la part du conducteur.

Toutefois, en cas d'erreur permanente sur le couple appliqué par le moteur thermique, notamment lors d'une phase de roulage en montagne, il existe le risque de vider la batterie de traction et donc d'engendrer des désagréments de conduite du véhicule automobile.

L'invention vise à remédier efficacement à cet inconvénient en proposant un procédé de compensation d'erreurs de réalisation de couple d'un moteur thermique appartenant à une chaîne de traction d'un véhicule automobile comportant en outre:
- une boîte de vitesses,
- le moteur thermique étant accouplé à la boîte de vitesses par l'intermédiaire d'un embrayage, et
- un moteur électrique de traction disposé en aval de l'embrayage,
- ledit procédé comportant, alors que l'embrayage est dans un état fermé:
- une étape de comparaison entre un couple cible correspondant à une volonté d'accélération de la part d'un conducteur et un couple réel égal à la somme d'un couple appliqué par le moteur électrique de traction et un couple transmis par l'embrayage correspondant au couple réalisé par le moteur thermique, et
- une étape d'application d'un surcouple par le moteur électrique de traction dans le cas où le couple réel est différent du couple cible du fait d'un écart entre le couple réalisé par le moteur thermique et un couple de consigne du moteur thermique, pour atteindre le couple cible,
- ledit procédé comportant en outre une étape d'ajout d'un terme compensatoire virtuel dans le couple transmis par l'embrayage.

L'invention permet ainsi, du fait de l'ajout du terme compensatoire virtuel dans le couple transmis par l'embrayage, de tromper la stratégie de compensation de couple du moteur thermique et de limiter l'intervention du moteur électrique de traction. On évite donc un déchargement intempestif de la batterie d'alimentation du moteur électrique de traction.

On comprendra par terme compensatoire virtuel, dans tout le texte de ce document, un terme dont la valeur est destinée à tromper la compensation d'erreurs. Ce terme compensatoire virtuel ne correspond pas à un couple réel de l'embrayage ou du moteur thermique, même si par analogie il serait de même nature qu'un couple.

Selon une mise en oeuvre, le terme compensatoire virtuel dépend de l'écart entre le couple réalisé par le moteur thermique et le couple de consigne du moteur thermique.

Selon une mise en oeuvre, l'écart de couple à compenser est adaptable.

Selon une mise en oeuvre, le terme compensatoire virtuel est ajustable de façon à adapter une dynamique de montée et/ou de descente d'une compensation de couple par le moteur électrique de traction.

Selon une mise en oeuvre, le terme compensatoire virtuel est ajustable pendant un changement de rapport de vitesse.

Selon une mise en oeuvre, lorsque l'embrayage passe dans un état différent de fermé, l'écart entre le couple réalisé par le moteur thermique et le couple de consigne du moteur thermique est considéré comme nul.

Selon une mise en oeuvre, ledit procédé est mis en oeuvre lors d'une phase de roulage en montagne.

Selon une mise en oeuvre, la boîte de vitesses est une boîte de vitesses automatique.

L'invention a également pour objet un calculateur comportant une mémoire stockant des instructions logicielles pour la mise en oeuvre du procédé de compensation d'erreurs de réalisation de couple d'un moteur thermique tel que précédemment défini.

L'invention sera mieux comprise à la lecture de la description qui suit et à l'examen des figures qui l'accompagnent. Ces figures ne sont données qu'à titre illustratif mais nullement limitatif de l'invention.

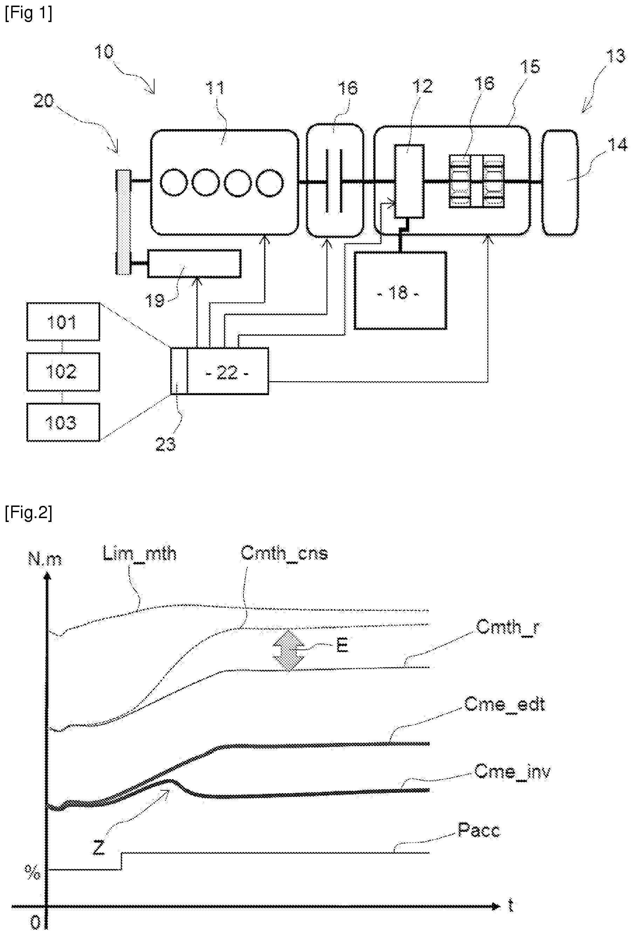

[Fig. 1] La figure 1 est une représentation schématique d'une chaîne de traction hybride d'un véhicule automobile mettant en oeuvre un procédé selon l'invention de compensation d'erreurs de réalisation de couple d'un moteur thermique;
[Fig. 2] La figure 2 est une représentation graphique en fonction du temps de l'évolution d'une limitation du couple du moteur thermique, d'un couple de consigne et d'un couple réel du moteur thermique, d'un couple réalisé par le moteur électrique de traction avec et sans la mise en oeuvre du procédé selon l'invention de compensation d'erreurs de réalisation de couple du moteur thermique;

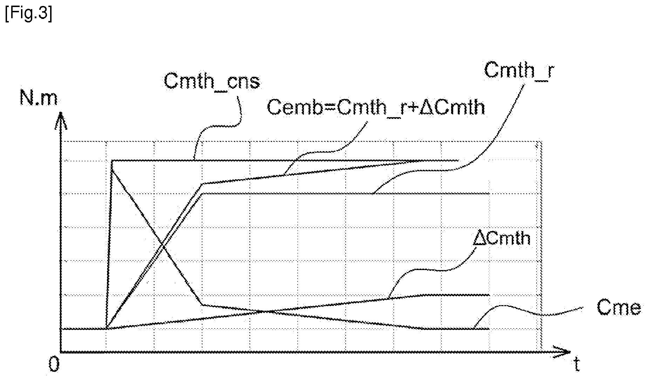

[Fig. 3] La figure 3 est une représentation graphique en fonction du temps de l'évolution d'un couple de consigne et d'un couple réel du moteur thermique, d'un terme compensatoire virtuel de couple, et du couple du moteur électrique de traction lors d'une mise en oeuvre du procédé selon l'invention de compensation d'erreurs de réalisation de couple du moteur thermique.

Plus précisément, la figure 1 montre une chaîne de traction 10 pour un véhicule automobile comportant un moteur thermique 11 et un moteur électrique de traction 12 montés sur un train 13 du véhicule automobile, notamment un train avant muni de roues 14. Le moteur thermique 11 pourra comporter par exemple trois ou quatre cylindres, voire plus de quatre cylindres.

Le moteur thermique 11 est accouplé à une boîte de vitesses 15 par l'intermédiaire d'un embrayage 16. Un arbre de sortie de la boîte de vitesses 15 est connecté aux roues par l'intermédiaire d'un différentiel (non représenté). La boîte de vitesses 15 est par exemple une boîte de vitesses automatique.

Le moteur électrique de traction 12 est disposé en aval de l'embrayage 16. Plus précisément, le moteur électrique de traction 12 est disposé entre l'embrayage 16 et un arbre primaire de la boîte de vitesses 15. Le moteur électrique de traction 12 pourra être intégré à l'intérieur du carter de la boîte de vitesses 15.

A l'état ouvert, l'embrayage 16 permet d'isoler le moteur électrique de traction 12 par rapport au moteur thermique 11 lorsque le moteur électrique 12 assure une traction du véhicule dans un mode de roulage électrique. L'embrayage 16 est fermé dans un mode de roulage thermique. L'embrayage 16 permet également le décollage par le glissement entre le moteur thermique 11 et la boîte de vitesses 15.

Une batterie 18 est reliée électriquement au moteur électrique de traction 12. La batterie 18 et le moteur électrique de traction 12 présentent de préférence une tension de fonctionnement comprise entre 300 Volts et 340 Volts. En variante, la tension de fonctionnement de la batterie 18 et du moteur électrique de traction 12 pourrait toutefois être inférieure, de l'ordre de 48 Volts notamment.

Le moteur électrique de traction 12 est apte à transformer une énergie électrique issue de la batterie 18 en une énergie mécanique pour assurer une traction du véhicule. Le moteur électrique de traction 12 est également apte à fonctionner dans un mode générateur dans lequel le moteur électrique 12 transforme une énergie mécanique en une énergie électrique permettant de recharger la batterie 18, notamment lors d'une phase de freinage récupératif.

La chaîne de traction 10 pourra également comporter au moins une machine électrique réversible 19 accouplée avec le moteur thermique 11 par l'intermédiaire d'un dispositif de transmission 20 à poulie et courroie. La machine électrique 19 pourra notamment assurer le redémarrage du moteur thermique 11 dans le cadre d'une stratégie d'arrêt et de redémarrage du moteur thermique 11 en fonction des conditions de circulation (système dit "stop and start" en anglais). La machine électrique 19 pourra également participer à la récupération d'énergie lors d'un freinage récupératif.

Un calculateur 22 assure le pilotage des différents composants de la chaîne de traction 10. Ce calculateur 22 comporte une mémoire stockant des instructions logicielles pour la mise en oeuvre du procédé selon l'invention de compensation d'erreurs de réalisation de couple du moteur thermique 11.

L'embrayage 16 étant dans un état fermé, le calculateur 22 compare, dans une étape 101, un couple cible correspondant à une volonté d'accélération de la part d'un conducteur et un couple réel égal à la somme d'un couple Cme appliqué par le moteur électrique de traction 12 et un couple Cemb transmis par l'embrayage 16 correspondant au couple appliqué par le moteur thermique 11. Le couple cible est par exemple obtenu au moyen d'une cartographie établissant une correspondance entre un couple cible et un enfoncement d'une pédale d'accélération.

Ainsi, le couple aux roues Cr est globalement réalisé de la manière suivante:
Cr={Cemb+Cme}.Rb, Rb étant le rapport de la boîte de vitesses 15.

Lorsque l'embrayage 16 est fermé, le couple Cemb transmis par ce dernier est égal au couple Cmth_r réalisé par le moteur thermique 11 au terme inertiel près. Par conséquent, le couple aux roues Cr est réalisé de la manière suivante: Cr={Cmth_r+Cme}.Rb

Afin d'éviter une consigne de surcompensation par le moteur électrique 12 lors d'erreur de réalisation du couple du moteur thermique 11, le calculateur 22 ajoute, dans une étape 102, un terme compensatoire ΔCmth virtuel dans le couple Cemb transmis par l'embrayage 16, soit Cemb=Cmth_r+ΔCmth

Le terme compensatoire ΔCmth virtuel dépend de l'écart entre le couple réel Cmth_r fourni par le moteur thermique 11 et le couple de consigne Cmth_cns du moteur thermique 11, soit ΔCmth=f(Cmth_cns,Cmth_r).

Le calculateur 22 commande, dans une étape 103, l'application d'un surcouple par le moteur électrique 12 dans le cas où le couple réel est différent du couple cible. Par exemple, dans le cas où le couple Cmth_r réalisé par le moteur thermique 11 est plus faible que le couple de consigne Cmth_cns du moteur thermique souhaité, un écart de couple E va être détecté et le couple Cemb transmis par l'embrayage 16 prend en compte cet écart E du fait de la présence du terme compensatoire virtuel. Cela va permettre de tromper les stratégies de compensation des erreurs de réalisation de couple du moteur thermique 11. Ainsi, on limite le couple appliqué par le moteur électrique de traction 12 pour compenser cet écart E.

La figure 2 montre ainsi une évolution en fonction du temps:
- de la limitation du couple du moteur thermique Lim_mth,
- du couple Cmth_cns de consigne du moteur thermique 11,
- du couple Cmth_r réalisé par le moteur thermique 11,
- du couple Cme_edt réalisé par le moteur électrique de traction 12 sans la stratégie de recalage selon l'invention,
- du couple Cme_inv réalisé par le moteur électrique de traction 12 avec la stratégie de recalage selon l'invention, et
- d'un enfoncement d'une pédale d'accélération Pacc exprimé en pourcentage d'un enfoncement maximal.

On observe ainsi que pour une erreur E dans la réalisation du couple du moteur thermique 11, il existe une compensation de cette erreur E par le moteur électrique de traction 12 qui applique le couple Cme_edt pour respecter la volonté du conducteur sans la stratégie de recalage de couple selon l'invention.

Avec la mise en oeuvre de la stratégie de recalage de couple selon l'invention, on observe dans la zone Z une diminution progressive de la compensation de l'erreur E de réalisation de couple du moteur thermique 11 par le moteur électrique 12 (cf. couple Cme_inv) du fait de la prise en compte du terme compensatoire ΔCmth virtuel.

La figure 3 montre une évolution en fonction du temps:
- du couple Cmth_cns de consigne du moteur thermique 11,
- du couple Cmth_r réalisé par le moteur thermique 11,
- du terme compensatoire ΔCmth virtuel,
- de la somme du couple Cmth_r réalisé par le moteur thermique 11 et du terme compensatoire ΔCmth virtuel, soit le couple Cemb transmis par l'embrayage 16,
- du couple Cme du moteur électrique 12 lors de la mise en oeuvre du procédé selon l'invention.

On observe qu'au fur et à mesure que le terme compensatoire ΔCmth virtuel augmente, le couple Cemb transmis par l'embrayage 16 augmente de façon à "leurrer" la compensation de couple effectuée par le moteur électrique 12. Le couple Cme appliqué par le moteur électrique 12 diminue alors progressivement.

Avantageusement, l'écart de couple E à compenser est adaptable, c'est-à-dire qu'il peut être borné par un seuil minimal et un seuil maximal au-delà duquel le moteur électrique de traction 12 n'appliquera pas de couple compensatoire virtuel.

Le terme compensatoire ΔCmth virtuel est ajustable de façon à adapter une dynamique de montée et/ou de descente d'une compensation de couple par le moteur électrique de traction 12.

Le terme compensatoire ΔCmth virtuel est ajustable pendant un changement de rapport de vitesse.

Le procédé est notamment mis en oeuvre lors d'une phase de roulage en montagne.

De préférence, le procédé est mis en oeuvre de façon transparente pour un conducteur du véhicule automobile, c'est-à-dire qu'aucune notification visuelle et/ou sonore n'est émise dans le cas où il existe une erreur de réalisation du couple du moteur thermique 11.

Lorsque l'embrayage 16 passe dans un état différent de fermé, l'écart E entre le couple Cmth_r fourni par le moteur thermique 11 et le couple Cmth_cns de consigne du moteur thermique 1 est considéré comme nul. Le procédé selon l'invention est alors inhibé, de sorte que le moteur électrique 12 applique un couple afin de respecter la volonté d'accélération de la part du conducteur.

## Revendications

1. Procédé de compensation d'erreurs de réalisation de couple d'un moteur thermique (11) appartenant à une chaîne de traction (10) d'un véhicule automobile comportant en outre:
- une boîte de vitesses (15),
- le moteur thermique (11) étant accouplé à la boîte de vitesses (15) par l'intermédiaire d'un embrayage (16), et
- un moteur électrique de traction (12) disposé en aval de l'embrayage (16),
- ledit procédé comportant, alors que l'embrayage (16) est dans un état fermé:
- une étape de comparaison entre un couple cible correspondant à une volonté d'accélération de la part d'un conducteur et un couple réel égal à la somme d'un couple (Cme) appliqué par le moteur électrique de traction (12) et un couple (Cemb) transmis par l'embrayage (16) correspondant au couple (Cmth_r) réalisé par le moteur thermique (11), et
- une étape d'application d'un surcouple par le moteur électrique de traction (12) dans le cas où le couple réel est différent du couple cible du fait d'un écart (E) entre le couple (Cmth_r) réalisé par le moteur thermique (11) et un couple (Cmth_cns) de consigne du moteur thermique (11), pour atteindre le couple cible,
**caractérisé en ce que** ledit procédé comporte une étape d'ajout d'un terme compensatoire (ΔCmth) virtuel dans le couple (Cemb) transmis par l'embrayage (16).

2. Procédé selon la revendication 1, dans lequel le terme compensatoire (ΔCmth) virtuel dépend de l'écart (E) entre le couple (Cmth_r) réalisé par le moteur thermique (11) et le couple (Cmth_cns) de consigne du moteur thermique (11).

3. Procédé selon la revendication 1 ou 2, dans lequel l'écart de couple (E) à compenser est adaptable.

4. Procédé selon l'une quelconque des revendications 1 à 3, dans lequel le terme compensatoire (ΔCmth) virtuel est ajustable de façon à adapter une dynamique de montée et/ou de descente d'une compensation de couple par le moteur électrique de traction (12).

5. Procédé selon l'une quelconque des revendications 1 à 4, dans lequel le terme compensatoire (ΔCmth) virtuel est ajustable pendant un changement de rapport de vitesse.

6. Procédé selon l'une quelconque des revendications 1 à 5, dans lequel lorsque l'embrayage (16) passe dans un état différent de fermé, l'écart (E) entre le couple (Cmth_r) réalisé par le moteur thermique (11) et le couple (Cmth_cns) de consigne du moteur thermique (11) est considéré comme nul.

7. Procédé selon l'une quelconque des revendications 1 à 6, lequel est mis en oeuvre lors d'une phase de roulage en montagne.

8. Procédé selon l'une quelconque des revendications 1 à 7, pour lequel la boîte de vitesses (15) est une boîte de vitesses automatique.

9. Calculateur (22) comportant une mémoire stockant des instructions logicielles pour la mise en oeuvre du procédé de compensation d'erreurs de réalisation de couple d'un moteur thermique (11) tel que défini selon l'une quelconque des revendications précédentes.

## Patentansprüche

1. Verfahren zur Kompensation von Fehlern bei der Drehmomentverwirklichung einer Wärmekraftmaschine (11), die zu einer Antriebskette (10) eines Kraftfahrzeugs gehört, ferner umfassend:
- ein Getriebe (15),
- die Wärmekraftmaschine (11) über eine Kupplung (16) mit dem Getriebe (15) gekoppelt ist, und
- einem der Kupplung (16) nachgeschalteten elektrischen Fahrmotor (12),
- wobei das Verfahren umfasst, während sich die Kupplung (16) in einem geschlossenen Zustand befindet:
- einen Vergleichsschritt zwischen einem Solldrehmoment, das einem Beschleunigungswunsch eines Fahrers entspricht, und einem Istdrehmoment, das der Summe eines vom elektrischen Fahrmotor (12) aufgebrachten Drehmoments (Cme) und eines übertragenen Drehmoments (Cemb) entspricht durch die Kupplung (16), die dem von der Wärmekraftmaschine (11) erzeugten Drehmoment (Cmth_r) entspricht, und
- einen Schritt des Aufbringens eines Überdrehmoments durch den elektrischen Traktionsmotor (12), falls das tatsächliche Drehmoment aufgrund einer Differenz (E) zwischen dem vom Motor (11) erzeugten Drehmoment (Cmth_r) und a vom Solldrehmoment abweicht Solldrehmoment (Cmth_cns) der Wärmekraftmaschine (11), um das Solldrehmoment zu erreichen,
**dadurch gekennzeichnet, dass** das Verfahren einen Schritt des Hinzufügens eines virtuellen Kompensationsterms (ΔCmth) zum von der Kupplung (16) übertragenen Drehmoment (Cemb) umfasst.

2. Verfahren nach Anspruch 1, bei dem der virtuelle Kompensationsterm (ΔCmth) von der Differenz (E) zwischen dem von der Wärmekraftmaschine (11) erzeugten Drehmoment (Cmth_r) und dem Solldrehmoment (Cmth_cns) der Wärmekraftmaschine (11) abhängt).

3. Verfahren nach Anspruch 1 oder 2, bei dem die auszugleichende Drehmomentdifferenz (E) anpassbar ist.

4. Verfahren nach einem der Ansprüche 1 bis 3, bei dem der virtuelle Kompensationsterm (ΔCmth) einstellbar ist, um eine Anstiegs- und/oder Abfalldynamik einer Drehmomentkompensation durch den elektrischen Traktionsmotor (12) anzupassen.

5. Verfahren nach einem der Ansprüche 1 bis 4, wobei der virtuelle Kompensationsterm (ΔCmth) während eines Gangwechsels einstellbar ist.

6. Verfahren nach einem der Ansprüche 1 bis 5, bei dem beim Übergang der Kupplung (16) in einen anderen als geschlossenen Zustand die Differenz (E) zwischen dem von der Wärmekraftmaschine (11) erzeugten Drehmoment (Cmth_r) und dem Solldrehmoment ermittelt wird (Cmth_cns) der Wärmekraftmaschine (11) wird als Null betrachtet.

7. Verfahren nach einem der Ansprüche 1 bis 6, das während einer Rollphase im Gebirge durchgeführt wird.

8. Verfahren nach einem der Ansprüche 1 bis 7, bei dem das Getriebe (15) ein Automatikgetriebe ist.

9. Computer (22), der einen Speicher umfasst, der Softwareanweisungen zum Implementieren des Verfahrens zum Kompensieren von Fehlern bei der Drehmomenterzeugung einer Wärmekraftmaschine (11) gemäß einem der vorhergehenden Ansprüche speichert.

## Claims

1. Method of compensating for errors in the torque realization of a heat engine (11) belonging to a traction chain (10) of a motor vehicle further comprising:
- a gearbox (15),
- the heat engine (11) being coupled to the gearbox (15) via a clutch (16), and
- an electric traction motor (12) disposed downstream of the clutch (16),
- said method comprising, while the clutch (16) is in a closed state:
- a comparison step between a target torque corresponding to a desire for acceleration on the part of a driver and an actual torque equal to the sum of a torque (Cme) applied by the electric traction motor (12) and a torque (Cemb) transmitted by the clutch (16) corresponding to the torque (Cmth_r) produced by the heat engine (11), and
- a step of applying an overtorque by the electric traction motor (12) in the case where the actual torque is different from the target torque due to a difference (E) between the torque (Cmth_r) produced by the motor (11) and a setpoint torque (Cmth_cns) of the heat engine (11), to reach the target torque,
**characterized in that** said method comprises a step of adding a virtual compensatory term (ΔCmth) in the torque (Cemb) transmitted by the clutch (16).

2. Method according to claim 1, in which the virtual compensatory term (ΔCmth) depends on the difference (E) between the torque (Cmth_r) produced by the heat engine (11) and the setpoint torque (Cmth_cns) of the heat engine (11).

3. Method according to Claim 1 or 2, in which the torque difference (E) to be compensated is adaptable.

4. Method according to any one of Claims 1 to 3, in which the virtual compensatory term (ΔCmth) is adjustable so as to adapt a rise and/or fall dynamics of a torque compensation by the electric traction motor ( 12).

5. A method according to any of claims 1 to 4, wherein the virtual compensatory term (ΔCmth) is adjustable during a gearshift.

6. Method according to any one of Claims 1 to 5, in which when the clutch (16) passes into a state other than closed, the difference (E) between the torque (Cmth_r) produced by the heat engine (11) and the setpoint torque (Cmth_cns) of the heat engine (11) is considered to be zero.

7. Method according to any one of Claims 1 to 6, which is implemented during a rolling phase in the mountains.

8. Method according to any one of Claims 1 to 7, in which the gearbox (15) is an automatic gearbox.

9. Computer (22) comprising a memory storing software instructions for implementing the method for compensating errors in the torque production of a heat engine (11) as defined according to any one of the preceding claims.
